# EUROPÄISCHE PATENTSCHRIFT

(11) **EP 2 085 794 B1**
(45) Veröffentlichungstag und Bekanntmachung des Hinweises auf die Patenterteilung: **14.12.2011**
(21) Anmeldenummer: 09001200.6
(22) Anmeldetag: 29.01.2009
(51) Int. Cl.: G01V 3/12, G01V 15/00

(54) **Vorrichtung und Verfahren zur Grenzflächendetektion in Bodenschichten**
Method and device for detecting boundary areas in soil layers
Dispositif et procédé destinés à la détection de surfaces limites dans des couches de sol

(30) Priorität: 04.02.2008 DE 102008007705
(43) Veröffentlichungstag der Anmeldung: 05.08.2009
(73) Patentinhaber: GBM Wiebe Gleisbaumaschinen GmbH, 28832 Achim (DE); Naue GmbH & Co. KG, 32339 Espelkamp-Fiestel (DE)
(72) Erfinder: Niessen, Jürgen, 28357 Bremen (DE); Johannssen, Karsten, 32369 Rahden (DE)
(74) Vertreter: Eisenführ, Speiser & Partner

(56) Entgegenhaltungen:
- EP-A- 1 574 878
- WO-A-03/012484
- JP-A- 8 240 667
- JP-A- 10 090 435
- US-B1- 6 772 091

## Beschreibung

Die Erfindung betrifft ein Verfahren zum Detektieren einer Grenzfläche zwischen zwei Bodenschichten, mit den Schritten: Einbringen einer Vielzahl von länglichen Reflexionselementen in die Ebene der zu detektierenden Grenzfläche, wobei die Reflexionselemente eine elektromagnetische Schwingung reflektieren, und in zueinander etwa paralleler und beabstandeter Anordnung eingebracht werden, Bewegen einer Sende- und Empfangseinheit für elektromagnetische Strahlung entlang einer Linie, die etwa parallel zu der Ebene, in welcher die Reflexionselemente liegen, und etwa senkrecht zu der Längserstreckungsrichtung jedes Reflexionselements liegt, Aussenden einer elektromagnetischen Strahlung aus der Sende und Empfangseinheit in Richtung der Reflexionselemente während der Bewegung der Sende und Empfangseinheit, Empfangen der von den Reflexionselementen reflektierten Anteile der elektromagnetischen Strahlung in der Sende- und Empfangseinheit. Weiterhin betrifft die Erfindung ein Messfahrzeug zur Durchführung dieses Verfahrens sowie ein System zur Kennzeichnung und Detektion von Grenzflächen zwischen zwei Bodenschichten.

Im Zuge der Neuherstellung oder Sanierung von tragfähigen Bodenschichtungen, beispielsweise einem Unterbau für einen Verkehrsweg wie eine Straße oder ein Bahngleis, ist es regelmäßig erforderlich, Materialschichten mit unterschiedlichen Eigenschaften übereinander anzuordnen. Zu diesem Zweck wird der Boden zunächst bis zu einer bestimmten Tiefe ausgehoben und hierauf folgend die Materialschichtungen aufeinanderfolgend und aufeinanderangeordnet eingebracht. Die unterschiedlichen Schichtungen übernehmen dabei funktionell teilweise unterschiedliche und sich ergänzende Aufgaben, wie beispielsweise die Lastverteilung, Drainage, Frostsicherheit, Abschirmung gegen aufsteigende Feuchtigkeit und dergleichen.

Auch in einer Reihe anderer Tiefbau-Anwendungen ist es erforderlich, definierte Bodenschichtungen einzubringen. So ist beispielsweise im Bereich des Deichbaus eine Bodenabdeckung einer bestimmten Stärke, insbesondere einer Stärke von mehr als 1m oberhalb einer Dichtung aufzutragen, um diese Dichtung vor Wurzel- und Nagetierbefall zu schützen. Im Deponiebau ist es ebenfalls vorteilhaft, eine Bodenschicht definierter Dicke, insbesondere einer Dicke von mehr als 1m oberhalb eines Dichtungspaketes vorzusehen. Im Straßenbau ist es in der Regel vorteilhaft und gefordert, unterhalb der Asphaltdecke eine Schicht nicht-wasserhaltigen Bodens definierter Dicke, insbesondere mit einer Dicke von zumindest 70cm vorzusehen, um Auffrierschäden in der Asphaltdecke zu verhindern.

Zur Erfüllung dieser Funktionen ist es regelmäßig erforderlich, die einzelnen Schichten in vorbestimmten Schichtdicken einzubringen. Aufgrund der teilweise hohen Kosten für das Schichtmaterial wird dabei bei zumindest einigen Schichten angestrebt, möglichst genau die erforderliche Schichtdicke einzuhalten und nicht unnötige Schichtdickenerhöhungen einzubringen.

Sowohl im Zuge der Herstellung bzw. Sanierung und dem hiermit verbundenen Einbringen der Bodenschichten als auch nach Fertigstellung des Unterbaus, sei es unmittelbar danach oder in regelmäßigen Zeitabständen im Verlauf der Nutzung ist es wünschenswert, die Schichtungen der einzelnen Schichten hinsichtlich ihrer Qualität und Geometrie kontrollieren zu können. Es ist bekannt, solche Kontrollen durchzuführen, indem eine Probekernbohrung genommen wird oder so genannte Schurfgruben erstellt werden, um anhand dieser auf die Qualität und Schichtdicke zu schließen. Allerdings kann mit diesem Verfahren lediglich eine punktuelle Überprüfung des Schichtaufbaus erfolgen und solches Vorgehen ist unzulänglich, wenn es darum geht, eine sich weiter erstreckende Bodenschicht in ihrer Gesamtheit zu kontrollieren.

Es ist weiterhin bekannt, Bodenschichten mittels eines Georadars zu untersuchen. Hierbei werden mittels einer Sende- und Empfangseinheit Radarstrahlen in Richtung des Bodens gesendet und die reflektierten Radarstrahlen empfangen. Anhand der Stärke und der Laufzeit des reflektierten Signals kann dann auf Qualität und Geometrie, insbesondere die Schichtdicke der Bodenschichten geschlossen werden. Dieses Georadarvermessungsverfahren hat zwar den Vorteil, eine kontinuierliche Messung der Bodenschichten zu ermöglichen und somit auch sich weiter erstreckende Bodenbereiche vermessen zu können, jedoch ist die Abbildungsgenauigkeit und -auflösung oftmals nicht ausreichend, um Grenzflächen zwischen zwei Bodenschichten ausreichend genau zu detektieren und folglich eine Schichtdickenbestimmung im hohen Genauigkeitsbereich zu ermöglichen.

Aus WO 03/012484 A1 ist es bekannt, bei der Herstellung der Bodenschichtungen eine geosynthetische Schicht einzubringen und ein wechselspannungs-elektrischleitendes Material gemeinsam mit dieser geosynthetischen Schicht anzuordnen. Das so angeordnete wechselspannungs-elektrischleitende Material kann mittels einer geophysikalischen Bodensondierungstechnik, wie beispielweise Bodensondierungsradar, erfasst werden und soll somit eine Detektion der durch die geosynthetische Struktur definierten Schichtgrenzen ermöglichen.

Grundsätzlich kann es mit einem solchen Verfahren möglich sein, Schichtgrenzen genauer zu detektieren, als wenn man auf die Einbringung eines geosynthetischen Materials mit dem entsprechenden wechselspannungs-elektrischleitenden Material verzichten würde. In der Praxis hat sich jedoch gezeigt, dass die von dem wechselspannungs-elektrischleitenden Material erhaltene Reflexionsstärke nicht ausreichend ist, um die zu detektierende Grenzfläche sicher zu ermitteln. Insbesondere dann, wenn tieferliegende Grenzflächen ermittelt werden sollen und die Detektion mit einer Radarantenne erfolgen soll, die mit einer Geschwindigkeit oberhalb von Schrittgeschwindigkeit bewegt wird, ist das Signal häufig so schwach, dass die Grenzfläche überhaupt nicht detektiert werden kann. WO 03/012484 schlägt eine Vielzahl von Anordnungsmöglichkeiten des wechselspannungs-elektrischleitenden Materials vor, darunter eine in Bezug auf die Längsrichtung eines zu vermessenden Gleiswegunterbaus diagonale Anordnung, eine hierzu parallele Anordnung oder eine hierzu senkrechte Anordnung von Aluminiumstreifen. Es hat sich in der Praxis jedoch gezeigt, dass mit keiner dieser Anordnung eine sichere Detektion der Grenzfläche anhand eines ausreichend starken reflektierten Signals gelingt, sobald die Radarantenne mit einer höheren Geschwindigkeit über den Gleisweg bewegt wird.

Aufgrund der zunehmenden Bedeutung des Unterbaus von Bauwerken wie Straßen oder Gleiswegen für die Sicherheit des darauf angeordneten Bauwerks, bei Gleiswegen beispielsweise wegen der steigenden Radlasten und Fahrgeschwindigkeiten, besteht ein Bedarf dafür, solche Bodenschichtungen unterhalb der Bauwerke in regelmäßigen Abständen zu überprüfen. Hierbei ist insbesondere interessant, welche Qualität und Dicke die einzelnen Bodenschichten aufweisen. Aufgrund der erheblichen Abmessungen solcher Unterbauten, bei Gleiswegen im Regelfall mehrere hundert Kilometer zu untersuchender Strecke, kommen hierbei jedoch nur Messverfahren in Frage, die eine Messung bei höheren Geschwindigkeiten, insbesondere mehr als Schrittgeschwindigkeit, erlauben.

Es ist die Aufgabe der Erfindung, ein Messverfahren bereitzustellen, dass eine Detektion von Grenzflächen bei hohen Messgeschwindigkeiten ermöglicht.

Diese Aufgabe wird erfindungsgemäß gelöst, indem bei einem Verfahren der eingangs genannten Art die ausgesendete elektromagnetische Strahlung einen linear polarisierten Wellenanteil aufweist und die Polarisationsebene dieses linear polarisierten Wellenanteils so ausgerichtet wird, dass die Längserstreckungsrichtung jedes Reflexionselements parallel zu der Ebene liegt, in der die E-Welle des linear polarisierten Wellenanteils schwingt.

Aus US 6,772,091 B1 ist ein Bodendurchdringungsradar zur Bestimmung der Tiefe von Verstärkungsbalken in einer Betonstruktur bekannt. Bei diesem Verfahren wird eine Antenneneinheit zum Aussenden und Empfangen von elektromagnetischen Signalen über eine mit einem mit senkrechten und längs ausgerichteten Verstärkungsbalken armierte Betonstruktur bewegt und durch Erfassung der Laufzeiten der von der Sendeantenne ausgesendeten Signale zu deren Empfang auf die Tiefe geschlossen, in der die Armierung liegt.

Die Erfindung beruht auf der Erkenntnis, dass eine schnellere Messgeschwindigkeit bei der elektromagnetischen Abtastung der Reflexionselemente nicht alleine durch eine bestimmte Anordnung der Reflexionselemente selbst zu erzielen ist. Stattdessen erkennt die Erfindung, dass die Ausrichtung der Reflexionselemente einerseits in ein bestimmtes geometrisches Verhältnis zu den Schwingungsebenen der elektromagnetischen Wellen gesetzt werden muss, mit denen die Reflexionselemente abgetastet werden sollen und andererseits die Signalstärke der reflektierten Wellen signifikant erhöht werden kann, wenn die elektromagnetische Strahlung zumindest teilweise, vorzugsweise vollständig linear polarisiert ist und die lineare Polarisationsebene so liegt, dass die Ebene, in welcher die E-Welle schwingt, parallel zur Richtung der Längserstreckung der Reflexionselemente liegt. Durch diese Maßnahmen wird die Signalstärke des reflektierten Signals erheblich erhöht, da die ausgesendeten elektromagnetischen Wellen auch bei hohen Bewegungsgeschwindigkeiten der Wellen in Detektionsrichtung, also in der Regel hohen Bewegungsgeschwindigkeiten der Sende- und Empfangseinheit selbst, stets in jeder Phase ihres Schwingungsverlaufs auf ein Reflexionselement treffen muss, wenn dieses überquert wird. Erfindungsgemäß ist dabei weiterhin erkannt worden, dass eine hohe Messgeschwindigkeit nur dann erzielbar ist, wenn die Reflexionselemente sich mit der Richtung ihrer Längserstreckung quer zur Bewegungsrichtung der Sende- und Empfangseinheit liegen, da hierdurch auch bei seitlichem Versatz der elektromagnetischen Strahlung in Bezug auf die Bewegungsrichtung der Sende- und Empfangseinheit stets die Reflexionselemente von der polarisierten Strahlung erfasst werden.

Das erfindungsgemäße Verfahren läuft dabei so ab, dass bei Erstellen der Bodenschichten die Reflexionselemente eingebracht werden und in dem Schichtaufbau liegen bleiben. Unmittelbar nach Erstellung bzw. Sanierung kann dann die Grenzfläche detektiert werden und hierdurch eine genaue Schichtdickenbestimmung erfolgen. Dabei ist zu verstehen, dass die Reflexionselemente in eine Grenzfläche, aber auch in mehrere Grenzflächen eingebracht werden können, um hierdurch übereinanderliegende Grenzflächen und deren Abstand voneinander genau bestimmen zu können. Die Detektion der Grenzflächen kann in regelmäßigen Zeitabständen, beispielsweise jährlich, wiederholt werden, um hierdurch Veränderungen am Unterbau festzustellen und rechtzeitig Gegenmaßnahmen einleiten zu können.

Bei linearer Polarisierung einer elektromagnetischen Welle entsteht im Idealfall eine E-Welle, die in einer Ebene schwingt und eine H-Welle, die in einer hierzu senkrechten Ebene schwingt. E- und H-Welle breiten sich in diesen Ebenen aus. Erfindungsgemäß wird eine solcherart polarisierte elektromagnetische Strahlung verwendet, wobei die Ausbreitungsebenen in den Boden gerichtet sind, vorzugsweise senkrecht, allerdings sind auch schräge Ausbreitungsebenen der E-Welle möglich. Die Polarisationsebene der E-Welle, also die Ebene, in welcher die Wellen der E-Welle liegen und entlang der sie sich ausbreiten, wird folglich durch die Richtung der Bewegung der Sende- und Empfangseinheit als Normalenvektor definiert oder hat zumindest einen Normalenvektor, der ein Vektoranteil dieser Bewegungsrichtung ist. Die H-Welle liegt in einer Polarisationsebene, welche die Bewegungsrichtung der Sende- und Empfangseinheit einschließt und senkrecht zur Bodenoberfläche liegt.

Mit dem erfindungsgemäßen Messverfahren kann die Signalstärke des reflektierten elektromagnetischen Signals erheblich erhöht werden und hierdurch einerseits ermöglicht werden, die Reflexionselemente in größeren Abständen und mit sehr geringen Abmessungen auszuführen, andererseits die Messgeschwindigkeit soweit zu erhöhen, dass auch lange Grenzflächen, beispielsweise entlang von Verkehrswegen wie Straßen oder Bahngleisen, in einer kurzen Zeit untersucht werden können.

Es ist gemäß einer ersten bevorzugten Ausführungsform bevorzugt, dass die ausgesendete elektromagnetische Strahlung linear polarisiert ist und die Polarisationsebene der linear polarisierten Wellen so ausgerichtet wird, dass die Längserstreckungsrichtung jedes Reflexionselements parallel zu der Ebene liegt, in der die E-Welle der polarisierten Wellen schwingt. Bei dieser Ausgestaltung wird die gesamte elektromagnetische Strahlung in der vorteilhaften linearen Polarisation ausgesendet, wodurch die Signalstärke des reflektierten Signals erheblich erhöht werden kann.

Weiterhin ist es bevorzugt, dass die Reflexionselemente vor dem Einbringen in die Ebene der zu detektierenden Grenzfläche mit einer geosynthetischen Schicht verbunden werden und hiernach die geosynthetische Schicht mit den daran befestigten Reflexionselementen in die Ebene der zu detektierenden Grenzfläche eingebracht wird. Diese Fortbildung ermöglicht eine weitaus präzisere und unproblematischere Einbringung der Reflexionselemente, indem diese an einer geosynthetischen Schicht in der entsprechenden Anordnung befestigt werden und dann die geosynthetische Schicht in die Grenzfläche eingebracht wird. Eine solche geosynthetische Schicht kann beispielsweise eine Kunststofffolie, eine Vlieslage oder dergleichen sein. Insbesondere ist es oftmals vorteilhaft, eine geosynthetische Schicht zu verwenden, die zugleich eine Funktion in dem Unterbau selbst übernimmt, beispielsweise eine Tragfähigkeitserhöhung, Dämmlage, eine Dämpfungsschicht, eine Sperrschicht bezüglich Feuchtigkeit oder dergleichen, so dass das erfindungsgemäße Detektionsverfahren keinen Schritt einer zusätzlichen Einbringung einer geosynthetischen Schicht erfordert, sondern lediglich die Befestigung der Reflexionselemente an einer solchen geosynthetischen Schicht vor deren ohnehin erforderlichen Einbringens.

Unter einer geosynthetischen Schicht soll hierbei eine aus künstlichen Materialien, insbesondere Kunststoffen hergestellte Schicht verstanden werden. Die geosynthetische Schicht kann dabei einlagig sein oder ein mehrlagiger Schichtverbund sein. Die geosynthetische Schicht kann insbesondere als vorgefertigte Schicht für das erfindungsgemäße Verfahren bereitgestellt werden, sie kann jedoch auch durch Einbringen eines Halbzeugs, wie beispielsweise Pulver oder Granulat und nachfolgende Aushärtung vor Ort eingebracht werden oder als halb vorgefertigte geosynthetische Schicht eingesetzt werden. Die geosynthetische Schicht kann verschiedene Aufgaben übernehmen. Insbesondere ist es bevorzugt, eine geosynthetische Schicht einzusetzen, welche eine Tragfähigkeitserhöhung der gesamten eingebrachten Bodenschichten bewirkt. Dies ist in vielen Anwendungen vorteilhaft, um die Aushubtiefe und somit das Volumen des zu bewegenden Erdmaterials zu verringern. Zu diesem Zweck eignen sich insbesondere geosynthetische Schichtverbünde, so beispielsweise Geogitter, gegebenenfalls in Kombination mit einem Geotextil. Eine typische solche Anwendung des erfindungsgemäßen Verfahrens beinhaltet das Einbringen eines Geotextils auf dem Rohplanum eines Gleisweges und das Aufbringen eines Geogitters auf dem Geotextil.

Weiterhin ist es bevorzugt, wenn die Reflexionselemente durch Einbringen reflektiver Partikel in und/oder auf die geosynthetische Schicht angeordnet werden. Diese Ausgestaltung ermöglicht einerseits eine effiziente und kostengünstige Vorfertigung der geosynthetischen Schicht, indem beispielsweise Metallpartikel streifenförmig in geosynthetische Schichten bei deren Herstellung eingebracht werden. Die Metallpartikel können auf diese Weise in stabiler Weise in der geosynthetischen Schicht verankert werden und dienen als reflektives Material zur Detektion der Schichtlage. In anderen Verfahrensformen kann die Schicht durch Aufdampfen von Partikeln oder andere Beschichtungsformen auf die geosynthetische Schicht aufgebracht werden.

Noch weiter ist es bevorzugt, wenn als geosynthetische Schicht zumindest zwei separate oder verbundene Schichtlagen in die Grenzfläche eingebracht werden. Durch eine Einbringung eines solchen geosynthetischen Schichtverbundes kann die geosynthetische Schicht neben der Detektionsmöglichkeit auch andere Aufgaben übernehmen, wie zuvor beschrieben, insbesondere Tragfähigkeitserhöhung, Verschleißschutz, Drainage oder dergleichen. Die zwei oder mehr Schichtlagen können dabei bereits bei Herstellung des Schichtverbundes miteinander verbunden werden und in einem Schritt eingebracht werden oder Sie können als separate Schichten bereitgestellt werden und separat aufeinanderfolgend eingebracht werden.

Noch weiter ist es bevorzugt, wenn eine tragfähige Schichtlage, insbesondere eine geosynthetische Gitterstrukturlage eingebracht wird und oberhalb und/oder unterhalb dieser tragfähigen Schichtlage eine verschleißmindernde Schicht, insbesondere eine geosynthetische Vlieslage eingebracht wird. Diese Ausgestaltung ermöglicht in vielen Anwendungen, in denen eine vorgegebene Tragfähigkeit erreicht werden soll und zugleich ein sicherer Nachweis einer bestimmten Bodenschichtdicke erfolgen muss, die Verringerung des Bodenaushubs und zugleich Verringerung des eingebrachten Bodenmaterials um einen signifikanten Betrag. So kann insbesondere im Gleisbau mit gleisgebundenen Maschinen darauf verzichtet werden, den Boden bis zu einer Tiefe auszuheben, zu der eine bestimmte, vorgeschriebene Tragkraft erreicht wird und stattdessen ein nur geringer Aushub durchgeführt werden und die Tragfähigkeit des dann nur in geringeren Volumenmengen einzubringenden neuen Bodenmaterials durch Einbringen einer geosynthetischen Schicht erhöht werden und hierbei zugleich die genaue Detektionsfähigkeit der Schichtdicke bereitgestellt werden.

Weiterhin ist es bevorzugt, dass die Reflexionselemente radarreflektiv sind und die elektromagnetische Strahlung Radarwellen umfasst. Eine elektromagnetische Strahlung im Radarwellenbereich hat sich für das erfindungsgemäße Messverfahren insbesondere als geeignet herausgestellt, da hiermit bei ausreichender räumlicher Auflösung hohe Messgeschwindigkeiten erzielbar sind.

Weiterhin ist es bevorzugt, dass die Reflexionselemente Aluminiumfolienstreifen sind, vorzugsweise Aluminiumfolienstreifen, die beidseitig kunststoffkaschiert sind. Grundsätzlich eignet sich als Reflexionselement jedes Material, dass wechselspannungsstromleitend ist, also beispielsweise jegliche metallische Materialien. Aus Kostengründen und aufgrund der hohen reflektiven Eigenschaften auch bei dünner Ausbildung und der im wesentlichen bestehenden Korrosionsbeständigkeit sind jedoch Aluminiumfolienstreifen bevorzugt, die zwecks Vermeidung von Korrosion und Schutz vor mechanischer Beschädigung einseitig oder beidseitig kunststoffkaschiert sein können.

Weiter bevorzugt ist es, dass die Reflexionselemente in einem Abstand von 1-10 Metern, insbesondere 3-7 Metern, vorzugsweise etwa 5 Metern eingebracht werden bzw. an der Geosynthetischen Schicht befestigt werden. Diese Abstandswerte haben sich als einerseits ausreichend für eine gute Auflösung der Messung und andererseits sparsame Verwendung der Reflexionselemente erwiesen.

Noch weiter ist es bevorzugt, wenn die Reflexionselemente quer zu ihrer Längserstreckung und in der Ebene der zu detektierenden Grenzfläche eine Breite von 5-35 cm, insbesondere 15-25cm, vorzugsweise etwa 20cm aufweisen. Diese Breitenabmessungen der Reflexionselemente haben sich als ausreichend für ein gut detektierbares, reflektiertes Signal erwiesen, ohne einen unerwünscht hohen Materialaufwand zur Herstellung der Reflexionselemente zu erfordern.

Noch weiter ist es bevorzugt, wenn die elektromagnetische Strahlung eine Frequenz von 200Mhz bis 2,2GHz hat, was sich als eine für ausreichende Auflösung und Messgeschwindigkeit geeignete Strahlungsfrequenz erwiesen hat.

Noch weiter ist es bevorzugt, wenn die Sende- und Empfangseinheit mit einer Geschwindigkeit von mehr als 50 km/h, insbesondere mehr als 75km/h und vorzugsweise mehr als 100km/h entlang der Linie bewegt wird. Mit dieser Messgeschwindigkeit, die erst durch die erfindungsgemäße Anordnung der Reflexionselemente und der Polarisierung der elektromagnetischen Strahlung mit entsprechender bestimmter Ausrichtung der Polarisationsebenen ermöglicht wird, kann eine ausreichend genaue Detektion und kurze Messzeit erzielt werden.

Schließlich ist es noch weiter bevorzugt, wenn aus der ermittelten Lage der Grenzfläche ein Schichtlagenvolumen berechnet wird, insbesondere aus den ermittelten Lagen von zwei Grenzflächen. Hierdurch kann aus den ermittelten Daten auf das Volumen einer Schicht und folglich die eingebrachte Materialmenge geschlossen werden.

Ein weiterer Aspekt der Erfindung ist ein Messfahrzeug zur Detektion einer Grenzfläche zwischen zwei Bodenschichten, umfassend: ein an einem Fahrgestell angeordnetes Fahrwerk, ausgebildet zur Bewegung des Fahrzeugs auf einer horizontalen Fläche und in einer Abtastrichtung, eine an dem Fahrgestell befestigte Sende und Empfangseinheit für elektromagnetische Strahlung, wobei die Sende- und Empfangseinheit ausgebildet ist, um eine elektromagnetische Strahlung auszusenden, die zumindest einen linear polarisierten Wellenanteil hat, vorzugsweise um eine elektromagnetische Strahlung auszusenden, die eine linear polarisierte Welle ist, bei dem das Fahrwerk und die Sende- und Empfangseinheit so zueinander angeordnet sind, dass die E-Welle des polarisierten Wellenanteils bzw. der polarisierten Welle in einer Ebene schwingt, die etwa senkrecht zu der Abtastrichtung liegt.

Ein solches Messfahrzeug eignet sich insbesondere zur Ausführung des erfindungsgemäßen Verfahrens. Dabei ist das am Fahrgestell angeordnete Fahrwerk so ausgebildet, dass es eine Bewegungsrichtung vorgibt, wie dies beispielsweise bei einem schienengebundenen Fahrzeug durch das Zusammenwirken der Räder mit den Schienen erfolgt. Es ist jedoch unter einer solchen vorgegebenen Richtung auch zu verstehen, dass diese durch ein Fahrwerk bereitgestellt wird, das eine an sich mögliche Lenkung und folglich Änderung der Fahrtrichtung ermöglicht, allerdings eine ausgeprägte bevorzugte gerade Fahrrichtung aufweist, wie dies beispielsweise für einen PKW oder LKW gilt. Erfindungsgemäß ist am Messfahrzeug eine Sende- und Empfangseinheit angeordnet, die in bestimmter Weise die polarisierte elektromagnetische Strahlung in einer Ebene abgibt, die zu dieser Fahrtrichtung so angeordnet ist, dass die E-Welle in einer Ebene schwingt, die senkrecht zur Fahrtrichtung liegt oder zumindest senkrecht zu einem Vektoranteil der Fahrtrichtung.

Ein weiterer Aspekt der Erfindung ist ein System zur Detektion einer Grenzfläche zwischen zwei Bodenschichten unterhalb eines sich in einer Längsrichtung erstreckenden Fahrwegs, insbesondere einer Straße oder einem Gleisweg, das System umfassend: ein Messfahrzeug nach der zuvor beschriebenen Bauweise, dessen Fahrwerk so ausgerichtet werden kann, dass es zu einer Fortbewegung des Messfahrzeugs führt, bei der die Abtastrichtung der Längsrichtung des Fahrwegs entspricht, eine Geosynthetischen Schicht, die sich in einer Längsrichtung weiter erstreckt als in einer Querrichtung und an der eine Vielzahl von Reflexionselementen befestigt sind, die aus einem Material gefertigt sind, das eine elektromagnetische Schwingung reflektiert, die in zueinander etwa paralleler und beabstandeter Anordnung an der Geosynthetischen Schicht befestigt sind, und die mit ihrer Längserstreckung senkrecht zur Längsrichtung der Geosynthetischen Schicht angeordnet sind.

Ein solches Detektionssystem umfasst sämtliche wesentlichen gegenständlichen Elemente, die zur Durchführung des erfindungsgemäßen Messverfahrens benötigt werden, so einerseits die Reflexionselemente, die hier vorzugsweise an einer Geosynthetischen Schicht angeordnet sind und andererseits ein Messfahrzeug, wie zuvor beschrieben. Mit diesen Elementen des erfindungsgemäßen Detektionssystems kann insbesondere das erfindungsgemäße Messverfahren durchgeführt werden, indem die Reflexionselemente mitsamt der Geosynthetischen Schicht in die zu detektierende Grenzfläche eingebracht werden und hierauf folgend mit einem Messfahrzeug der zuvor beschriebenen Art detektiert werden können, wenn sich dieses über die Reflexionselemente hinweg bewegt.

Das System kann insbesondere dadurch fortgebildet werden, dass die geosynthetische Schicht als tragfähigkeitsunterstützende Schicht ausgebildet ist. Hierdurch wird eine Tragfähigkeitserhöhung bei gleicher Bodenaushubtiefe erreicht bzw. die Möglichkeit bereitgestellt, die Bodenaushubtiefe zu verringern und hierbei die Bodentragfähigkeit konstant zu halten.

Dabei ist es besonders bevorzugt, wenn die geosynthetische Schicht ein Schichtverbund aus zumindest zwei separaten oder verbundenen Schichten ist, insbesondere einer tragfähigen geosynthetischen Gitterstrukturschicht und einer darauf oder darunter angeordneten Bodentrennschicht, wie einer geosynthetischen Vlieslage. Durch eine solche Schichtverbundlage kann eine signifikante Erhöhung der Bodentragfähigkeit erreicht werden. Insbesondere eignet sich eine solche Schichtverbundlage in der Anwendung zwischen dem Planum und der darüber liegenden Planumsschutzschicht oder einer Schotterschicht eines Gleiswegunterbaus.

Schließlich ist ein weiterer Aspekt der Erfindung die Verwendung des zuvor erläuterten Detektionsverfahrens zur Detektion einer Grenzfläche zwischen zwei Bodenschichten unterhalb eines Fahrwegs. Ein solcher Fahrweg kann insbesondere eine Straße oder ein Bahngleis sein. Wie zuvor erläutert, eignet sich das erfindungsgemäße Detektionsverfahren insbesondere für eine solche Detektionsaufgabe, da es erstmalig eine präzise Detektion von Grenzflächen bei hohen Messgeschwindigkeiten ermöglicht. Dabei hat sich überraschend herausgestellt, dass durch die erfindungsgemäß definierte Ausrichtung der Reflexionselemente mit ihrer Längserstreckungsrichtung quer zur Bewegungsrichtung der Sende- und Empfangseinheit in besonders vorteilhafter Weise auch die störenden Einflüsse von den Schienen eines Bahngleises vermindert oder sogar vollständig vermieden werden können, da durch die polarisierte Ausrichtung der für die Messung maßgeblichen E-Wellen der elektromagnetischen Strahlung diese Schienen nur wenig oder keine Reflexionen bewirken.

Eine bevorzugte Ausführungsform wird anhand der anhängenden Figur beschrieben. Es zeigt:

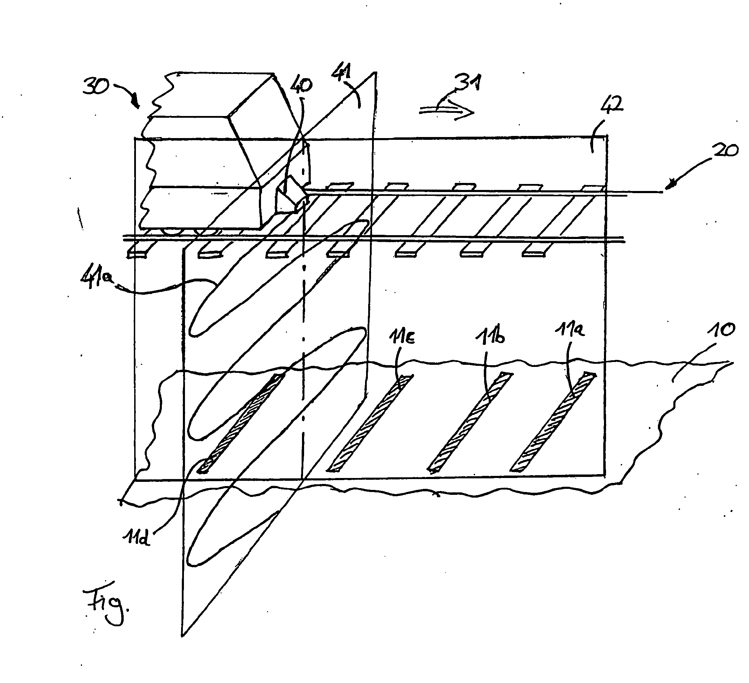

- Fig. 1:: Eine schematische Darstellung des Vermessungssystems in der Anwen- dung der Detektion einer Grenzfläche im Unterbau eines Bahngleises.

Wie aus der Figur ersichtlich, kann das erfindungsgemäße Vermessungssystem bzw. das erfindungsgemäße Detektionsverfahren insbesondere zur Detektion einer Grenzfläche unterhalb eines Bahngleises dienen. Im abgebildeten Anwendungsbeispiel ist eine geosynthetische Schicht 10 unterhalb des Bahngleises in den Erdboden eingearbeitet. Diese geosynthetische Schicht ist ein Geotextilvlies, welches ausreichend robust und wasserdurchlässig ist, um die Wasserdurchlässigkeit des gesamten Unterbaus nicht zu beeinträchtigen und zugleich eine Diffusionssperre für feine Partikel darstellt. Oberhalb des Geotextils 10 ist eine Planumsschutzschicht aus feinkörnigem Material aufgebaut.

Bei dem Geotextil handelt es sich vorzugsweise um einen Schichtverbund aus einer Gitterstruktur, die aus rechtwinklig zueinander angeordneten Polypropylen (PP)-Streifen besteht und vorzugsweise eine biaxiale Festigkeit von 20 kN/m bis 60 kN/m aufweist. Alternativ kann auch eine Gitterstruktur aus Polyester (PET)-Streifen vorzugsweise mit einer biaxialen Festigkeit von 80 kN/m bis 400 kN/m verwendet werden. Oberhalb dieser Gitterstruktur kann beispielsweise eine fest an die Gitterstruktur angebundene Faservliesstruktur mit unregelmäßiger Faserlage ("non-woven") aus Polypropylen oder Polyester in einer Schichtdicke von 0,5 bis 5,0 mm angeordnet sein/werden. Diese Vlieslage dient dem Fixieren von Bodenpartikeln und hat zugleich eine Drainagewirkung durch ihre hohe Wasserdurchlässigkeit. Vorzugsweise ist in die Vlieslage durch Einbringen von Metallpartikeln in Pulverform als Querstreifen die Radarreflektivität bereitgestellt. Alternativ kann dies auch durch Verkleben von Aluminiumstreifen auf der Vlieslage im Bereich zwischen Gitterstruktur und Vlies oder auf der der Gitterstruktur abgewandten Seite der Vlieslage erfolgen. Dabei ist zu berücksichtigen, dass für die Zwecke der Bauabnahme eine unbeschichtete Einbringung des Reflektionsstreifens wirtschaftlich sinnvoll ist, da in diesem Fall lediglich eine kurze Detektierbarkeit gewährleistet sein muss, wohingegen bei einer gewünschten langfristigen Detektierbarkeit auf beschichtete reflektive Elemente zurückgegriffen werden muss, um eine Degradation, Korrosion oder dergleichen zu verhindern.

In das Geotextil 10 sind mehrere beidseitige laminierte Aluminiumstreifen 11 a-d eingearbeitet und daran befestigt. Das Geotextil 10 erstreckt sich in Längsrichtung unterhalb eines Bahngleises 20 und die Aluminiumstreifen 11a-d sind quer zu dieser Längsrichtung im Geotextil 10 angeordnet.

Ein Vermessungsfahrzeug 30 fährt auf dem Gleis 20 in der in der Figur abgebildeten Richtung 31 von links nach rechts. An dem Vermessungsfahrzeug 30 ist frontseitig eine Radarantenne 40 angeordnet. Die Radarantenne 40 sendet linear polarisierte Wellen in senkrecht nach unten gerichteter Ausbreitungsrichtung aus. Die linear polarisierten Wellen werden solcherart ausgerichtet, dass die E-Welle der Radarwellen in einer Polarisationsebene 41 liegen. Die Polarisationsebene 41 liegt senkrecht zur Fahrtrichtung des Messfahrzeugs 30 und hierdurch parallel zur Längserstreckungsrichtung der Aluminiumstreifen 11a-d.

Die H-Wellen der Radarstrahlen des Bodenradars 40 liegen in einer Ebene 42 und breiten sich entlang dieser Ebene aus. Die Ebene 42 liegt parallel zur Fahrtrichtung 31 des Messfahrzeugs 30 und erstreckt sich in vertikaler Richtung genau in der Mitte zwischen den beiden Gleisen des Bahngleises 20.

Das erfindungsgemäße Detektionsverfahren läuft wie folgt ab: Nachdem im Zuge des Neubaus oder der Sanierung des Unterbaus des Gleisweges ein Planum geschaffen worden ist, wird das Geotextil 10 mit den daran befestigten Aluminiumstreifen 11a-d auf das Planum oder eine zuvor darauf angeordnete Schicht aufgelegt. Nicht notwendigerweise muss das Geotextil auf eine bereits eingebrachte Schicht aufgebracht werden, sondern es kann auch auf den Boden einer etwaig ausgehobenen Grube/eines Grabens aufgelegt werden, um später die unterste Fläche des eingebrachten Unterbaus detektieren zu können.

Nach Einbringen des Geotextils 10 kann oberhalb des Geotextils 10 eine weitere Bodenschicht aufgebracht werden, gegebenenfalls gefolgt von noch weiteren Bodenschichten anderer Qualitäten, die gegebenenfalls wiederum vor Einlegen eines Geotextils auf die zuvor aufgebrachte Schicht eingebracht werden. Auf diese Weise wird ein Schichtaufbau im Unterbau erzielt, der die unterschiedlichen Qualitäten der Bodenschichten in vertikaler Staffelung aufweist, getrennt durch zumindest ein zwischen den Schichtungen eingebrachtes Geotextil in denjenigen Grenzflächen, die für eine spätere Qualitätskontrolle des Unterbaus von Bedeutung sind, insbesondere mit mehreren solchen Geotextilien.

Nachdem auf diese Weise der Unterbau fertiggestellt worden ist, kann beispielweise mittels eines an einem Radfahrzeug befestigten Bodenradars zunächst eine Qualitätsprüfung des Unterbaus erfolgen, bevor die Gleise und Schwellen des Bahngleises aufgelegt, montiert und eingeschottert werden. Es ist jedoch auch möglich, das Bahngleis unmittelbar aufzulegen, zu montieren und einzuschottern und auf diese Weise den Gleisweg vollständig fertigzustellen und erst hiernach, beispielsweise im Rahmen einer Bauabnahme, die Detektion der Grenzfläche oder der Grenzflächen mittels eines Messfahrzeugs vorzunehmen.

Zur Detektion der Grenzfläche(n) fährt ein Messfahrzeug, je nachdem, ob bereits ein Gleis liegt oder noch nicht, kann dies ein gleisgebundenes Messfahrzeug sein oder ein Messfahrzeug, welches sich nicht gleisgebunden fortbewegt, in Längsrichtung über den fertiggestellten Unterbau. Hierbei wird von einer am Messfahrzeug angeordneten Georadarantenne eine linear polarisierte Radarstrahlung in Bodenrichtung abgegeben. Die Radarstrahlung ist dabei hinsichtlich ihrer Polarisation so ausgerichtet, dass die E-Welle des Radars in einer Ebene schwingt, die senkrecht zur Fahrtrichtung des Messfahrzeugs liegt. Auf diese Weise ist sichergestellt, dass ein Aluminiumstreifen des Geotextils 10 mit Sicherheit von den E-Wellen des Georadars erfasst wird, da diese E-Wellen in einer Ebene parallel zu den Aluminiumstreifen schwingen und sich senkrecht zu diesen ausbreiten. Das solcherart vom Aluminiumstreifen reflektierte Radarsignal wird von der Radarantenne am Messfahrzeug empfangen, und seine Laufzeit hierbei registriert. Aus der Laufzeitmessung kann bei bekannter Ausbreitungsgeschwindigkeit der Wellen die genaue Lage des Aluminiumstreifens und folglich des Geotextils bzw. der zu detektierenden Grenzfläche berechnet werden.

Aus den Reflexionen der in einem Abstand von 5m mit einer jeweiligen Breite von 20cm angeordneten Aluminiumstreifen kann dann die Tiefe des Geotextils und folglich die Lage der Grenzfläche über die gesamte Länge des Gleiswegs bestimmt werden. Aus den solcherart erhaltenen geometrischen Daten über die Lage der Grenzfläche in der Tiefe des Gleiswegs kann dann beispielsweise eine Schichtstärke berechnet werden, beispielsweise indem der Abstand zwischen der detektierten Grenzfläche und einer anderen, klar erkennbaren Grenzfläche oder der Oberfläche berechnet wird. Weiterhin ist es möglich, eine Schichtstärke zwischen zwei in unterschiedlicher Tiefe eingebrachten Geotextilien zu bestimmen. Aus den so ermittelten Schichtstärken kann dann beispielsweise auch auf ein dazwischen angeordnetes Volumen durch Berechnung zurückgeschlossen werden, was insbesondere für Vorbereitungen für Sanierungstätigkeiten oder Überprüfung zugesagter eingebrachter Volumina bestimmter Materialien hilfreich ist.

## Patentansprüche

1. Verfahren zum Detektieren einer Grenzfläche zwischen zwei Bodenschichten unterhalb eines Bahngleises (20), mit den Schritten:
a. Einbringen einer Vielzahl von länglichen Reflexionselementen (11a-d) in die Ebene der zu detektierenden Grenzfläche,
i. wobei die Reflexionselemente eine elektromagnetische Schwingung reflektieren, und
ii. in zueinander etwa paralleler und beabstandeter Anordnung eingebracht werden,
b. Bewegen einer Sende- und Empfangseinheit (40) für elektromagnetische Strahlung entlang einer Linie,
i. die etwa parallel zu der Ebene, in welcher die Reflexionselemente liegen, und
ii. etwa senkrecht zu der Längserstreckungsrichtung jedes Reflexionselements liegt,
c. Aussenden einer elektromagnetischen Strahlung aus der Sende und Empfangseinheit in Richtung der Reflexionselemente während der Bewegung der Sende- und Empfangseinheit,
d. Empfangen der von den Reflexionselementen reflektierten Anteile der elektromagnetischen Strahlung in der Sende und Empfangseinheit,
**dadurch gekennzeichnet, dass** die ausgesendete elektromagnetische Strahlung einen linear polarisierten Wellenanteil aufweist und die Polarisationsebene dieses linear polarisierten Wellenanteils so ausgerichtet wird, dass die Längserstreckungsrichtung jedes Reflexionselements parallel zu der Ebene liegt, in der die E-Welle des linear polarisierten Wellenanteils schwingt und dass sich die H-Welle der elektromagnetischen Strahlung in einer sich in vertikaler Richtung in der Mitte zwischen den beiden Gleisen des Bahngleises erstreckenden Ebene ausbreitet.

2. Verfahren nach Anspruch 1,
**dadurch gekennzeichnet, dass** die ausgesendete elektromagnetische Strahlung linear polarisiert ist und die Polarisationsebene der linear polarisierten Wellen so ausgerichtet wird, dass die Längserstreckungsrichtung jedes Reflexionselements parallel zu der Ebene liegt, in der die E-Welle der polarisierten Wellen schwingt.

3. Verfahren nach Anspruch 1 oder 2,
**dadurch gekennzeichnet, dass** die Reflexionselemente (11a-d) vor dem Einbringen in die Ebene der zu detektierenden Grenzfläche in oder an einer geosynthetischen Schicht (10) angeordnet werden und hiernach die geosynthetische Schicht (10) mit den daran befestigten Reflexions-elementen (11a-d) in die Ebene der zu detektierenden Grenzfläche eingebracht wird.

4. Verfahren nach dem vorhergehenden Anspruch,
**dadurch gekennzeichnet, dass** die Reflexionselement (11a-d) durch Einbringen reflektiver Partikel in und/oder auf die geosynthetische Schicht (10) angeordnet werden.

5. Verfahren nach einem der beiden vorhergehenden Ansprüche,
**dadurch gekennzeichnet, dass** als geosynthetische Schicht (10) ein oder mehrere separate oder miteinander verbundene Schichtlagen in die Grenzfläche eingebracht werden.

6. Verfahren nach dem vorhergehenden Anspruch,
**dadurch gekennzeichnet, dass** eine tragfähige Schichtlage, insbesondere eine geosynthetische Gitterstrukturlage eingebracht wird und oberhalb und/oder unterhalb dieser tragfähigen Schichtlage eine verschleißmindernde Schicht, insbesondere eine geosynthetische Vlieslage eingebracht wird.

7. Verfahren nach einem der vorhergehenden Ansprüche,
**dadurch gekennzeichnet, dass** die Reflexionselemente (11a-d) radarreflektiv sind und die elektromagnetische Strahlung Radarwellen umfasst.

8. Verfahren nach einem der vorhergehenden Ansprüche,
**dadurch gekennzeichnet, dass** die Reflexionselemente Aluminiumfolien- oder Aluminiumpartikelstreifen sind, vorzugsweise Aluminiumstreifen, die beidseitig kunststoffkaschiert sind.

9. Verfahren nach einem der vorhergehenden Ansprüche,
**dadurch gekennzeichnet, dass** die Sende- und Empfangseinheit (40) mit einer Geschwindigkeit von mehr als 50 km/h, insbesondere mehr als 75km/h und vorzugsweise mehr als 100km/h entlang der Linie bewegt wird.

10. Verfahren nach einem der vorhergehenden Ansprüche,
**dadurch gekennzeichnet, dass** aus der ermittelten Lage der Grenzfläche ein Schichtlagenvolumen berechnet wird, insbesondere aus den ermittelten Lagen von zwei Grenzflächen.

11. System zur Detektion einer Grenzfläche zwischen zwei Bodenschichten unterhalb eines sich In einer Längsrichtung erstreckenden Gleiswegs (20), das System umfassend:
a. ein Messfahrzeug (30) umfassend:
b. ein an einem Fahrgestell angeordnetes Fahrwerk, ausgebildet zur Bewegung des Fahrzeugs auf einer horizontalen Fläche und in einer Abtastrichtung,
c. eine an dem Fahrgestell befestigte Sende und Empfangseinheit (40) für elektromagnetische Strahlung, wobei die Sende- und Empfangseinheit ausgebildet ist, um eine elektromagnetische Strahlung auszusenden, die zumindest einen linear polarisierten Wellenanteil hat, vorzugsweise um eine elektromagnetische Strahlung auszusenden, die eine linear polarisierte Welle ist,
bei dem das Fahrwerk und die Sende- und Empfangseinheit so zueinander angeordnet sind, dass die E-Welle des polarisierten Wellenanteils bzw. der polarisierten Welle in einer Ebene schwingt, die etwa senkrecht zu der Abtastrichtung liegt und sich die H-Welle der elektromagnetischen Strahlung in einer sich in vertikaler Richtung in der Mitte zwischen den beiden Gleisen des Bahngleises erstreckenden Ebene ausbreitet, dessen Fahrwerk so ausgerichtet werden kann, dass es zu einer Fortbewegung des Messfahrzeugs führt, bei der die Abtastrichtung der Längsrichtung (31) des Fahrwegs entspricht,
d. eine geosynthetische Schicht (10), die sich in einer Längsrichtung weiter erstreckt als in einer Querrichtung und in oder an der eine Vielzahl von Reflexionselementen (11a-d) befestigt sind,
i. die aus einem Material gefertigt sind, das eine elektromagnetische Schwingung reflektiert,
ii. die in zueinander etwa paralleler und beabstandeter Anordnung an der geosynthetischen Schicht befestigt sind, und
iii. die mit ihrer Längserstreckung senkrecht zur Längsrichtung der geosynthetischen Schicht angeordnet sind.

12. System nach dem vorhergehenden Anspruch,
**dadurch gekennzeichnet, dass** die geosynthetische Schicht (10) als tragfähigkeitsunterstützende Schicht ausgebildet ist.

13. System nach dem vorhergehenden Anspruch,
**dadurch gekennzeichnet, dass** die geosynthetische Schicht (10) ein Schichtverbund aus zumindest zwei separaten oder verbundenen Schichten ist, insbesondere einer tragfähigen geosynthetischen Gitterstrukturschicht und einer darauf oder darunter angeordneten Verschleißschutzschicht, wie einer geosynthetischen Vlieslage.

14. Verwendung des Verfahrens oder Systems nach einem der vorhergehenden Ansprüche 1-13 zur Detektion einer Grenzfläche zwischen zwei Bodenschichten unterhalb eines Fahrwegs.

## Claims

1. Method of detecting a boundary surface between two layers of earth underneath a railway line (20) comprising the steps:
a. introducing a plurality of oblong reflection elements (11a-d) into the plane of the boundary surface to be detected,
i. which reflection elements reflect an electromagnetic oscillation, and
ii. are placed in an approximately parallel arrangement spaced apart from one another,
b. moving a unit (40) for transmitting and receiving electromagnetic radiation along a line,
i. which lies approximately parallel with the plane in which the reflection elements lie, and
ii. lies approximately perpendicular to the direction of longitudinal extension of each reflection element,
c. transmitting electromagnetic radiation from the transmitter and receiver unit in the direction of the reflection elements as the transmitter and receiver unit is being moved,
d. receiving portions of the electromagnetic radiation reflected by the reflection elements in the transmitter and receiver unit,
**characterised in that** the transmitted electromagnetic radiation has a linearly polarised wave portion and the polarisation plane of this linearly polarised wave portion is oriented so that the direction of longitudinal extension of each reflection element lies parallel with the plane in which the E-wave of the linearly polarised wave portion oscillates and the H-wave of the electromagnetic radiation is propagated in a plane extending in the vertical direction in the middle between the two rails of the railway line.

2. Method as claimed in claim 1,
**characterised in that** the transmitted electronic radiation is linearly polarised and the polarisation plane of the linearly polarised waves is oriented so that the direction of longitudinal extension of every reflection element is parallel with the plane in which the E-wave of the polarised waves oscillates.

3. Method as claimed in claim 1 or 2,
**characterised in that**, prior to being introduced into the plane of the boundary surface to be detected, the reflection elements (11a-d) are placed in or on a geosynthetic layer (10), after which the geosynthetic layer (10) with the reflection elements (11a-d) affixed to it is introduced into the plane of the boundary surface to be detected.

4. Method as claimed in the preceding claim, **characterised in that** the reflection elements (11a-d) are placed in and/or on the geosynthetic layer (10) by incorporating reflective particles.

5. Method as claimed in one of the preceding claims, **characterised in that** one or more separate layer plies which are separate from or joined to one another are introduced into the boundary surface as the geosynthetic layer (10).

6. Method as claimed in the preceding claim, **characterised in that** a load-bearing layer ply, in particular a geosynthetic lattice structured layer, is introduced and a wear-reducing layer is introduced on top of and/or underneath this load-bearing layer ply, in particular a geosynthetic fleece layer.

7. Method as claimed in one of the preceding claims, **characterised in that** the reflection elements (11a-d) reflect radar and the electromagnetic radiation comprises radar waves.

8. Method as claimed in one of the preceding claims, **characterised in that** the reflection elements are strips of aluminium foil or aluminium particles, preferably strips of aluminium faced with plastic on both sides.

9. Method as claimed in one of the preceding claims, **characterised in that** the transmitter and receiver unit (40) is moved along the line at a speed of more than 50 km/h, in particular more than 75km/h and preferably more than 100 km/h.

10. Method as claimed in one of the preceding claims, **characterised in that** a layer ply volume is calculated from the detected position of the boundary surface, in particular from the detected position of two boundary surfaces.

11. System of detecting a boundary surface between two layers of earth underneath a railway line (20) extending in a longitudinal direction, which system comprises:
a. a measuring vehicle (30) comprising:
b. a carriage disposed on a chassis designed to move the vehicle on a horizontal surface and in a scanning direction,
c. a unit (40) for transmitting and receiving electromagnetic radiation secured to the chassis, which transmitter and receiver unit is designed to transmit electromagnetic radiation having at least a linearly polarised wave portion, preferably for transmitting an electromagnetic radiation which is a linearly polarised wave,
and the carriage and transmitter and receiver unit are disposed relative to one another so that the E-wave of the polarised wave portion or the polarised wave oscillates in a plane lying approximately perpendicular to the scanning direction and the H-wave of the electromagnetic radiation is propagated in a plane extending in the vertical direction in the middle between the two rails of the railway line, the carriage of which can be oriented so that it causes an advancing movement of the measuring vehicle during which the scanning direction corresponds to the longitudinal direction (31) of the travel path,
d. a geosynthetic layer (10) which extends farther in a longitudinal direction than in a transverse direction and in or to which is affixed a plurality of reflection elements (11a-d),
i. which are made from a material which reflects an electromagnetic oscillation,
ii. which are secured to the geosynthetic layer spaced apart in a parallel arrangement, and
iii. which are disposed with their longitudinal extension perpendicular to the longitudinal direction of the geosynthetic layer.

12. System as claimed in the preceding claim, **characterised in that** the geosynthetic layer (10) is provided in the form of a load-bearing supporting layer.

13. System as claimed in the preceding claim, **characterised in that** the geosynthetic layer (10) is a layered composite comprising at least two separate or joined layers, in particular a load-bearing geosynthetic lattice structured layer and a protective fleece layer disposed on top or underneath, such as a geosynthetic fleece layer.

14. Use of the method or system as claimed in one of preceding claims 1-13 for detecting a boundary surface between two layers of earth underneath a travel path.

## Revendications

1. Procédé pour détecter une surface limite entre deux couches du sol en-dessus d'une voie ferrée (20) comportant les étapes suivantes :
a) introduction d'une pluralité d'éléments de réflexion oblongs (11a-d) dans le plan de la surface limite à détecter,
i. les éléments de réflexion réfléchissant une vibration électromagnétique, et
ii. étant introduits selon une disposition à peu près espacée les uns par rapport aux autres et à distance les uns des autres,
b) déplacement d'une unité d'émission et de réception (40) pour des rayonnements électromagnétiques le long d'une ligne,
i. laquelle est à peu près parallèle au plan dans lequel se trouvent les éléments de réflexion, et
ii. se situe à peu près perpendiculairement à la direction d'extension longitudinale de chaque élément de réflexion,
c) envoi d'un rayonnement électromagnétique par l'unité d'émission et de réception en direction des éléments de réflexion pendant le déplacement de l'unité d'émission et de réception,
d) réception des composantes du rayonnement électromagnétique réfléchies par les éléments de réflexion dans l'unité d'émission et de réception,
**caractérisé en ce que** le rayonnement électromagnétique envoyé présente une composante d'onde polarisée linéairement et **en ce que** le plan de polarisation de cette composante d'onde polarisée linéairement est orienté de manière à ce que la direction d'extension longitudinale de chaque élément de réflexion se situe parallèlement au plan dans lequel oscille l'onde E de la composante d'onde polarisée linéairement, et **en ce que** l'onde H du rayonnement électromagnétique se propage dans un plan s'étendant en direction verticale au milieu entre les deux rails de la voie ferrée.

2. Procédé selon la revendication 1, **caractérisé en ce que** le rayonnement électromagnétique envoyé est polarisé linéairement et **en ce que** le plan de polarisation des ondes polarisées linéairement est orienté de manière à ce que la direction d'extension longitudinale de chaque élément de réflexion se situe parallèlement au plan dans lequel oscille l'onde E des ondes polarisées.

3. Procédé selon la revendication 1 ou 2, **caractérisé en ce que** les éléments de réflexion (11a-d) sont disposés avant l'introduction dans le plan de la surface limite à détecter dans, ou sur une couche géosynthétique (10) et **en ce que** l'on introduit ensuite la couche géosynthétique (10) avec les éléments de réflexion (11a-d) fixés dessus dans le plan de la surface limite à détecter.

4. Procédé selon la revendication précédente, **caractérisé en ce que** les éléments de réflexion (11a-d) sont disposés grâce à l'introduction de particules réflectives dans et/ou sur la couche géosynthétique (10).

5. Procédé selon l'une des deux revendications précédentes, **caractérisé en ce qu'**en guise de couche géosynthétique (10), on introduit une ou plusieurs couches séparées ou reliées ensemble dans la surface limite.

6. Procédé selon la revendication précédente, **caractérisé en ce que** l'on introduit une couche à capacité de support, en particulier une couche à structure grillagée géosynthétique, et **en ce que** l'on introduit au-dessus ou en-dessous de cette couche à capacité de support une couche évitant l'usure, en particulier une couche de non tissé géosynthétique.

7. Procédé selon l'une des revendications précédentes, **caractérisé en ce que** les éléments de réflexion (11a-d) sont à réflexion de radars et **en ce que** le rayonnement électromagnétique comprend des ondes radar.

8. Procédé selon l'une des revendications précédentes, **caractérisé en ce que** les éléments de réflexion sont des bandes à particules d'aluminium ou à feuilles d'aluminium, de préférence des bandes d'aluminium, lesquelles sont doublées d'une matière synthétique des deux côtés.

9. Procédé selon l'une des revendications précédentes, **caractérisé en ce que** l'unité d'émission et de réception (40) est déplacée à une vitesse de plus de 50 km à l'heure, en particulier de plus de 75 km à l'heure et de préférence de plus de 100 km à l'heure le long de la ligne.

10. Procédé selon l'une des revendications précédentes, **caractérisé en ce que** l'on calcule un volume de couches à partir de la position détectée de la surface limite, en particulier à partir des positions détectées de deux surfaces limite.

11. Système pour la détection d'une surface limite entre deux couches du sol en-dessous d'une voie ferrée (20) s'étendant dans une direction longitudinale, le système comprenant :
a) un véhicule de mesure (30) comprenant :
b) un train disposé sur un châssis, réalisé pour le déplacement du véhicule sur une surface horizontale et dans une direction de balayage,
c) une unité d'émission et de réception (40) fixée sur le châssis pour un rayonnement électromagnétique, l'unité d'émission et de réception étant conçue pour envoyer un rayonnement électromagnétique, lequel possède au moins une composante d'onde polarisée linéairement, de préférence pour envoyer un rayonnement électromagnétique qui est une onde polarisée linéairement,
dans le cadre duquel le châssis et l'unité d'émission et de réception sont disposés l'un par rapport à l'autre de manière à ce que les ondes E de la composante d'onde polarisée et/ou de l'onde polarisée oscille dans un plan, lequel est à peu près perpendiculaire à la direction de balayage et l'onde H du rayonnement électromagnétique se propageant dans un plan s'étendant en direction verticale au milieu entre les deux rails de la voie ferrée, dont le châssis peut être orienté de manière à produire un mouvement de déplacement du véhicule de mesure, avec lequel la direction de balayage correspond à la direction longitudinale (31) du châssis,
d) une couche géosynthétique (10) laquelle s'étend plus loin dans une direction longitudinale que dans une direction transversale et dans, ou sur laquelle une pluralité d'éléments de réflexion (11a-d) sont fixés,
i. lesquels sont fabriqués en un matériau réfléchissant une vibration électromagnétique,
ii. lesquels sont fixés selon une disposition à peu près en parallèle et à distance les uns des autres sur la couche géosynthétique, et
iii. lesquels sont disposés avec leur étendue longitudinale perpendiculairement à la direction longitudinale de la couche géosynthétique.

12. Système selon la revendication précédente, **caractérisé en ce que** la couche géosynthétique (10) est réalisée en tant que couche d'aide au support.

13. Système selon la revendication précédente, **caractérisé en ce que** la couche géosynthétique (10) est une liaison de couches formée par au moins deux couches séparées ou reliées, en particulier par une couche à structure grillagée géosynthétique à capacité de support et une couche de protection contre l'usure disposée au-dessus ou en-dessous de celle-ci, ainsi que par une couche de non tissé géosynthetique.

14. Utilisation du procédé ou système selon l'une des revendications précédentes 1-13 pour la détection d'une surface limite entre deux couches du sol en-dessous d'une route.
